**Europäisches Patentamt**

**European Patent Office**

**Office européen des brevets**

(11) Veröffentlichungsnummer: **0 412 161 A1**

## EUROPÄISCHE PATENTANMELDUNG
### veröffentlicht nach Art. 158 Abs. 3 EPÜ

(21) Anmeldenummer: **89904876.3**

(22) Anmeldetag: **12.01.89**

(86) Internationale Anmeldenummer:
**PCT/SU89/00004**

(87) Internationale Veröffentlichungsnummer:
**WO 90/08294 (26.07.90 90/17)**

(51) Int. Cl.⁵: **F25B 17/08**

(43) Veröffentlichungstag der Anmeldung:
**13.02.91 Patentblatt 91/07**

(84) Benannte Vertragsstaaten:
**DE FR GB NL**

(71) Anmelder: **INNOVATSIONNY TSENTR "INTERLAB"**
**ul. Profsojuznaya, 84/32**
**Moscow, 117810(SU)**

(72) Erfinder: **MOISEEV, Sergei Borisovich**
**Leninsky pr., 52-281**
**Moscow, 117333(SU)**

(74) Vertreter: **Röhl, Wolf Horst et al**
**Rethelstrasse 123**
**D-4000 Düsseldorf 1(DE)**

(54) **KRYOGENE ADSORPTIONSKÄLTEMASCHINE UND VERFAHREN ZUR KÜHLUNG EINES OBJEKTES MIT HILFE DIESER KÄLTEMASCHINE.**

(57) Die kryogene Adsorptionskältemaschine weist zwei Stränge (a,b) auf, von denen jeder Strang einen Behälter (2a, 2b) mit einem Adsorber, Eine Wärmeaustausch-Einheit (3) und einen Wärmeübertragungsbehälter (4a, 4b) umfaßt. Die Wärmeübertragungsbehälter (4a, 4b) sind miteinander mittels einer Verbindungsleitung (7) gekoppelt, an welcher eine Joule-Thompson-Drossel (8) vorgesehen ist.

Das Verfahren zur Kühlung eines Objektes (6) mit Hilfe der kryogenen Adsorptionskältemaschine zeigt sich darin, daß an das Objekt (6) zuvor nur ein Wärmeübertragungsbehälter (4a bzw. 4b) angeschlossen wird, in dem ein Kryomedium bei der Temperatur und dem Druck der Kryostatierung enthalten ist, und daß anschließend nach Beendigung der Desorption in der Hochdruckleitung eine isentrope Expansion des Kryomediums in der Hochdruckleitung veranlaßt und an das Objekt (6) zusätzlich der zweite Wärmeübertragungsbehälter (4b bzw. 4a) angeschlossen wird.

Xerox Copy Centre

# KRYOGENE ADSORPTIONSKÄLTEMASCHINE UND VERFAHREN ZUR KÜHLUNG EINES OBJEKTES MIT HILFE DIESER KÄLTEMASCHINE

Die Erfindung bezieht sich auf die Kryotechnik und betrifft insbesondere eine kryogene Adsorptionskältemaschine sowie ein Verfahren zur Kühlung eines Objektes mit Hilfe dieser Kältemaschine in einem weiten Bereich zwischen 80 K und 0,3 K.

Zugrundeliegender Stand der Technik

Derzeit sind zwei grundsätzliche Verfahren bekannt, die sich in der laufenden Praxis für die Erreichung von Tieftemperaturen durchgesetzt haben, und zwar der Joule-Thompson-Effekt und die isentrope Gasexpansion unter Abgabe der äußeren Arbeit. Die meisten bestehenden Kältemaschinen bedienen sich mehr oder weniger eines von diesen Verfahren oder einer Kombination davon-

Als Beispiel dafür kann die weitgehend bekannte mechanische kryogene Kältemaschine angeführt werden, bei der die genannten Effekte in einer Kombination angewendet worden sind und die bei Verwendung von Mittel- und

Hochdruckkreisprozessen (Claude) arbeitet. Diese Kältemaschine umfaßt einen mechanischen Verdichter, eine Wärmeaustausch-Einheit, eine Expansionsmaschine, eine Joule-Thompson-Drossel und einen Wärmeübertragungsbehälter zur Sammlung des flüssigen Kryomediums, die untereinander mittels Hoch- und Niederdruckleitungen verbunden sind.

Das in dem mechanischen Verdichter nach der Kühlung in der ersten Stufe der Wärmeaustausch-Einheit komprimierte Kryomedium wird in zwei Ströme eingeteilt, von denen der eine Strom in die Expansionsmaschine für die isentrope Dilatation bei Abgabe der äußeren Arbeit zufließt, wo er abgekühlt und in die Niederdruckleitung geleitet wird. Der andere Strom wird in der zweiten Stufe der Wärmeaustausch-Einheit und abgekühlt dehnt sich dann in der Joule-Thompson-Drossel aus, wobei sich ein Anteil des Kryomediums verflüssigt und der Rest über die Niederdruckleitung in den Verdichter zurückgeführt wird.

Die mechanischen kryogenen Kältemaschinen sichern eine Kühlung von Objekten in einem weiten Temperaturbereich, bis hinab zu dem absoluten Nullpunkt nahen Temperaturen. Jedoch zeichnen sich die mechanischen Kältemaschinen zugleich durch eine hohe Masse, große Abmessungen, einen hohen Energiebedarf und eine kurze Lebensdauer aus und besitzen eine Menge von Laufzeug, so daß sie als Quellen von Vibrations- und elektromagnetischen Störungen fungieren, wodurch sie sich für die Kühlung hochempfindliche Empfänger als ungeeignet erweisen.

Allgemein bekannt sind kryogene Adsorptionskältemaschine, die auf einer Adsorption und Desorption der Kryomedien durch feste Adsorber beruhen, wobei die Desorption bei höheren Temperaturen abläuft.

Es ist eine kryogene Adsorptionskältemaschine zur Kühlung von Objekten auf Temperaturen von unter 1 K bekannt, die bei Verwendung des Effektes Adsorption-Desorption des Kryomediums, also des Heliums-3, durch den Adsorber, die aktivierte Kohle, arbeitet. Diese Kältemaschine stellt eine Kapsel dar, die mit dem Kryomedien gefüllt ist und einen Behälter mit dem Adsorber, der mit einem Erhitzer und einem Kühler bestückt ist, und einen Wärmeübertragungsbehälter, der mit dem zu kühlenden Objekt in thermischer Berührung steht, enthält. (US, A, 4.300.360). Der Behälter mit dem Adsorber steht mittels einer Rohrleitung mit dem Wärmeübertragungsbehälter in Verbindung. Als Kühler der Kältemaschine dient ein Gefäß mit dem flüssigen Helium-4, mit dem der mit dem Adsorber gefüllte Behälter mittels einer Wärmebrücke verbunden ist.

Die Kühlung eines Objektes vollzieht sich bei der bekannten kryogenen Adsorptionskältemaschine folgendermaßen. Man setzt den Siedepunkt des Heliums-4 unter den Kondensationspunkt des Heliums-3 (unter 3,2 K) durch Evakuieren der Dämpfe des Heliums-4 unter Vakuum bei nachfolgender Desorption des Heliums-3 aus dem Behälter mit dem Adsorber in den Wärmeübertragungsbehälter herab, wodurch dieses im Übertragungsbehälter kondensiert wird. Im Anschluß daran beginnt man mit dem Evakuieren des Heliums-3 durch die Adsorption dessen Dämpfe mittels des gekühlten Adsorbers. Die Temperatur des flüssigen Heliums-3 fällt hierbei auf 0,3 K ab, was für die Wärmeabfuhr von dem zu kühlenden Objekt ausgenutzt wird. Das Evakuieren des Heliums-4 für die Kondensation des Heliums-3 setzt eine Vakuumanordnung voraus, wodurch das Schaltbild der Kältemaschine komplizierter wird.

Diese bekannte Kältemaschine hat eine intermittierende Arbeitsweise. Der Prozeß der Kondensation verursacht eine Unterbrechung des Betriebes der Kältemaschine.

Es ist weiter eine kryogene Adsorptionskältemaschine (SU, A, 1096443) bekannt, deren Schaltbild dem vorstehend beschriebenen ähnlich ist, dafür aber unterscheidet sich das Verfahren zur Kühlung von Objekten mit ihrer Hilfe dadurch, daß die Desorption des Heliums-3 bei relativ hohem Druck abläuft, so daß der Prozeß der adiabatischen Expansion für die Kondensation des Heliums-3 genutzt wird.

Das Kryomedium wird zuvor im Behälter mit dem Adsorber durch dessen Kühlung adsorbiert. Nachher wird der Behälter aufgeheizt, wodurch eine Desorption des Kryomediums unter relativ hohem Druck auftritt. Nach der Kühlung des Kryomediums auf die Temperatur des flüssigen Heliums-4, das im Gefäß beim Atmosphärendruck siedet, kühlt man den Behälter mit dem Adsorber auf die Temperatur der Adsorption. Hierbei wird das komprimierte Kryomedium sorbiert, so daß der Vorgang der isentropen Expansion des kryomediums abläuft und das letztere sich teilweise verflüssigt. Der Vorgang läuft bei der Kühlung der Verdampfer-Stufe bis auf eine Temperatur von 4,2 K ab und benötigt kein Evakuieren des Heliums-4 aus dem Gefäß.

Jedoch wird bei dem beschriebenen Verfahren zur Kühlung des Objektes ein höherer Anteil des gasförmigen Kryomediums, das aus dem Adsorber desorbiert worden ist, während der Adsorption wieder sorbiert, der dann an der Verflüssigung nicht mehr beteiligt ist. Dadurch verschlechtert sich der Wirkungsgrad der Kältemaschine.

Der Prozeß der Verdichtung des Kryomediums mit nachfolgender Kondensation setzt eine Unterbrechung des Kältemaschinenkreisprozesses voraus. Die Kältemaschine arbeitet wiederum aussetzend.

Es ist schließlich eine kryogene Adsorptionskältemaschine bekannt, die kontinuierlich arbeitet und eine Kapsel darstellt, die mit einem Kryomedium gefüllt ist und sich aus zwei parallelen Strängen zusammensetzt, welche miteinander durch eine Verbindungsleitung verbunden sind und von denen jeder Strang, aufeinanderfolgend mittels Hoch- und Niederdruckleitungen untereinander verbunden, einen Behälter mit einem Adsorber, der mit einem Erhitzer und einem Kühler ausgestattet ist, eine Wärmeaustausch-Einheit, einen Wärmeübertragungsbehälter und eine Wärmebrücke für die Kontaktgabe mit der Oberfläche des zu kühlenden Objektes aufweist. In der Hochdruckleitung jedes Stranges ist zwischen der Wärmeaustausch-Einheit und dem Wärmeübertragungsbehälter eine Joule-Thompson-Drossel angeordnet. In jeder Rohrleitung sind ferner je zwei Ventile zwischen dem Behälter mit dem Adsorber und der Wärmeaustausch Einheit vorgesehen. Hierbei ist die Verbindungsleitung an die Rohrleitungen an den Stellen zwischen dem ersten und dem zweiten Ventil angeschlossen (US, A, 4.641.499).

Das Verfahren zur Kühlung eines Objektes unter Verwendung der obig beschriebenen kryogenen Adsorptionskältemaschine zeigt sich darin, daß mit dem Objekt mindestens ein Wärmeübertragungsbehälter thermisch gekoppelt wird, in welchem das Kryomedium bei einer Tempera tur und einem Druck der Kryostatierung enthalten ist, das durch die Verdichtung des Kryomediums in der Hochdruckleitung der kryogenen Kältemaschine dank der Desorption des Kryomediums aus dem Behälter mit dem Adsorber während der Erhitzung des letzteren auf die Temperatur der Desorption, die Kühlung des verdichteten Kryomediums in der Wärmeaustausch-Einheit, das nachfolgende Einspritzen des verdichteten und abgekühlten Kryomediums über die Joule-Thompson-Drossel unmittelbar vor der Zuführung zu dem an das Objekt angeschlossenen Wärmeübertragungsbehälter, das Evakuieren des Kryomediums aus diesem Wärmeübertragungsbehälter über die Niederdruckleitung unter Erwärmung in der Wärmeaustausch-Einheit und dessen Förderung in den Behälter mit dem Adsorber in der Niederdruckleitung bei Kühlung des Kryomediums auf die Temperatur der Adsorption gewonnen wird und daß nach voller Adsorption des gesamten Kryomediums aus dem Wärmeübertragungsbehälter in der Niederdruckleitung der Behälter mit dem Adsorber in dieser Leitung von der Kühlung auf die Erhitzung umgestellt wird.

Bei dieser Kältemaschine bedient man sich das Joule-Thompson-Kreisprozesses unter Regeneration des Direkt-und Rückstromes des Kryomediums innerhalb der Wärmeaustausch-Einheit. Dank dem Vorhandensein zweier Parallelstränge kann bei der bekannten Kältemaschine eine kontinuierliche Kryostatierung realisiert werden. Die beweglichen Teile wie die Ventile machen jedoch das Schema komplizierter und beeinträchtigen dessen Verläßlichkeit. Dazu kommt, daß im betrieb sämtlicher, obig beschriebenen Kältemaschinen ein Anteil des Kryomediums als flüssige Phase verfügbar ist, wodurch der Einsatz der bekannten Kältemaschinen unter Bedingungen der Schwerelosigkeit, Vibrationen und einer Änderung der Orientierung der Kältemaschinen bezüglich der Schwer- und Beschleunigungskräfte komplizierter wird. Offenbarung der Erfindung

Der Erfindung liegt die Aufgabe zugrunde, eine kryogene Adsorptionskältemaschine zu schaffen, die ein einfacheres und zuverlässiges Schema ohne bewegliche Teile aufweist, sowie ein Verfahren zur Kühlung eines Objektes mit Hilfe dieser Kältemaschine zu entwickeln, das durch einen hinreichend hohen Wirkungsgrad gekennzeichnet ist und das eine kontinuierliche Kühlung eines Objektes u.a. bei Schwerelosigkeit sicherstellt.

Diese Aufgabe wird dadurch gelöst, daß bei einer kryogenen Adsorptionskältemaschine, die eine Kapsel darstellt, die mit einem Kryomedium gefüllt und als mindestens zwei Parallelstränge ausgeführt ist, welche miteinander durch eine Verbindungsleitung verbunden sind und von denen jeder Strang, aufeinanderfolgend mittels Hoch- und Niederdruckleitungen untereinander verbunden, einen Behälter mit einem Adsorber, der mit einem Erhitzer und einem Kühler ausgestattet ist, eine Wärmeaustausch-Einheit, einen Wärmeübertragungsbehälter und eine Wärmebrücke für die Kontaktgabe mit der Oberfläche des zu kühlenden Objektes aufweist, erfindungsgemäß die Verbindungsleitung die Wärmeübertragungsbehälter miteinander unmittelbar verbindet und eine Joule-Thompson-Drossel trägt und die Hoch- und Niederdruckleitungen jedes Stranges als eine einheitliche Rohrleitung ausgeführt sind, die die Funktion einer Hoch- und einer Niederdruckleitung abwechselnd erfüllt.

Die gestellte Aufgabe wird ferner dadurch gelöst, daß bei einem Verfahren zur Kühlung eines Objektes mit Hilfe der kryogenen Adsorptionskältemaschine, welches darin besteht, daß mit dem Objekt mindestens ein Wärmeübertragungsbehälter thermisch gekoppelt wird, in welchem das Kryomedium bei der Temperatur und dem Druck der Kryostatierung enthalten ist, das durch die Verdichtung des Kryomediums in der Hochdruckleitung der kryogenen Kältemaschine dank der Desorption des Kryomediums aus dem Be hälter mit dem Adsorber während der Erhitzung des letzteren auf die Temperatur der Desorption, durch die Kühlung des verdichteten Kryomediums in der Wärmeaustausch-Einheit, durch das nachfolgende Einspritzen des verdichteten und abgekühlten Kryomediums durch die Joule-Thompson-Drossel unmittelbar vor der Zuführung zu dem an das Objekt angeschlossenen Wärmeübertragungsbehälter, durch das Evakuieren des Kryomediums aus diesem Wärmeübertragungsbehälter über die Niederdruckleitung unter Erwärmung in der Wärmeaustausch-Einheit und dessen Transport in den Behälter mit dem Adsorber in der Niederdruckleitung bei Kühlung des Kryomediums auf die Temperatur der Adsorption gewonnen wird und daß nach voller Adsorption des gesamten Kryomediums aus dem Wärmeübertragungsbehälter in der Niederdruckleitung der Behälter mit dem Adsorber in dieser Leitung von der Kühlung auf die Erhitzung umgestellt wird, erfindungsgemäß das Kryomedium in der Hochdruckleitung so lange verdichtet wird, bis die Desorption beendet worden ist, wonach erst der Behälter mit dem Adsorber auf die Kühlung umgestellt wird und das Kryomedium in der Hochdruckleitung zur Sicherung dessen isentroper Expansion und dessen Kühlung evakuiert wird und nach Erreichen der Temperatur und des Druckes der Kryostatierung von dem Kryomedium im Wärmeübertragungsbehälter in der Hochdruckleitung dieser Behälter zusätzlich an das zu kühlende Objekt thermisch angeschlossen wird.

Die erfindungsgemäß ausgeführte kryogene Adsorbtionskältemaschine weist ein einfaches Schema - ihr jeder Strang besitzt nur eine Rohrleitung, die abwechselnd sowohl als eine Hochdruckleitung als auch als eine Niederdruckleitung fungiert - auf, hat keine beweglicher Teile und ist durch eine hohe Betriebssicherheit gekennzeichnet, denn ihre Lebensdauer beträgt einige Jahrzehnte. Die Kältemaschine ist in der Lage, unter Bedingungen der Schwerelosigkeit und in willkürlicher Lage bezüglich der Schwer- und Beschleunigungskräfte betrieben zu werden.

Das erfindungsgemäße verfahren zur Kühlung eines Objektes, das mit Hilfe dieser Kältemaschine durchgeführt wird, gestattet es, die Kälte ununterbrochen bereitzustellen und den Wirkungsgrad durch die Nutzung des Effektes der isentropen Expansion in der Hochdruckleitung von der Umschaltung der Fließrichtung des Kryomediums bei dessen Fließen durch die Drossel und durch den Anschluß des zweiten Wärmeübertragungsbehälters an das Objekt zu verbessern.


Kurze Beschreibung der Zeichnungen

Im folgenden wird die Erfindung durch die Beschreibung deren konkreter Ausführungsformen unter Bezugnahme auf die beigefügten Zeichnungen näher erläutert, in denen zeigt:

Fig. 1 ein Schema für eine erfindungsgemäße kryogene Adsorptionskältemaschine;

Fig. 2 eine Ausführungsform einer Wärmeaustausch-Einheit für die in Fig. 1 dargestellte Kältemaschine;

Fig. 3 eine Ausführungsform der Wärmeaustausch-Einheit für den Anwendungsfall der erfindungsgemäßen Kältemaschine an Bord eines kosmischen Apparates;

Fig. 4 eine Beziehung zwischen der Temperaturänderung (Abszissenachse) und der Zeit (Ordinatenachse) in verschiedenen Punkten des Stranges "a" der erfindungsgemäßen Kältemaschine;

Fig. 5 dito wie in Fig. 4 nur für den Strang b und

Fig. 6 a und b Zyklogramme für die Betriebsweise der Wärmebrücken.


Bevorzugte Ausführungsform der Erfindung

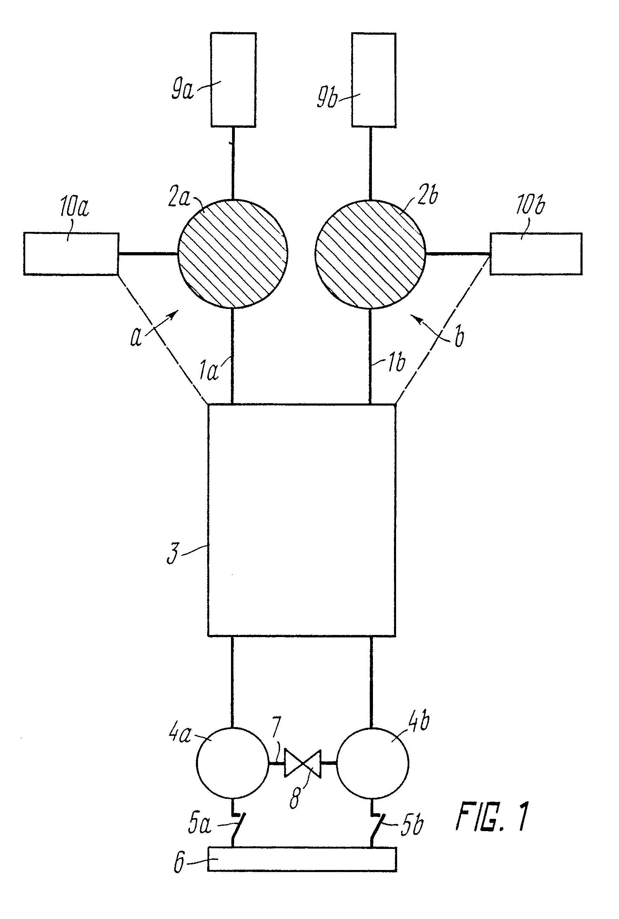

Die in Fig. 1 dargestellte kryogene Adsorptionskältemaschine stellt eine hermetisch abgeschlossene Kapsel dar, die mit einem Kryomedium wie, z.B., Helium-3, Wasserstoff, Sauerstoff bzw. einem anderen, für die Gestaltung eines kryogenen Kreisprozesses unter Verwendung der Prozesse Adsorption-Desorption geeigneten Gas gefüllt ist. Die Kapsel besteht aus mindestens zwei Parallelsträngen - im beschriebenen Fall sind das "a" und "b" -, von denen jeder Strang, aufeinanderfolgend mittels Rohrleitungen 1a (1b) geschaltet, einen Behälter 2a (2b) mit einem Adsorber, eine Wärmeaustausch-Einheit 3, einen Wärmeübertragungsbehälter 4a (4b) aufweist, an Welchem eine Wärmebrücke 5a (5b) für die Kontaktgabe mit der Oberfläche des zu kühlenden Objektes 6 angebracht ist.

Die Wärmeübertragungsbehälter 4a, 4b sind miteinander durch eine Verbindungsleitung 7 verbunden, an welcher eine Joule-Thompson-Expansionsdrossel 8 vorgesehen ist. Jeder Behälter 2a, 2b mit dem Adsorber ist jeweils mit einem Erhitzer 9a, 9b und einem Kühler 10a, 10b ausgestattet. Die Rohrleitungen 1a, 1b, die die Behälter 2a, 2b mit dem Adsorber jeweils mit den Wärmeübertragungsbehältern 4a, 4b verbinden, und die Verbindungsleitung 7 dienen für die abwechselnde Erfüllung der Funktionen einer Hoch- und einer Niederdruckleitung. Daher sind die Kennwerte für die Rohrleitungen 1a, 1b, die Verbindungsleitung 7 und die Stränge der Wärmeaustausch-Einheit 3 davon ausgehend festgelegt, um die sowohl an die Hochdruckleitung, als auch an die Niederdruckleitung gestellten Forderungen zu erfüllen.

Als Adsorber werden bei der erfindungsgemäßen Kältemaschine Stoffe eingesetzt, welche befähigt sind, bei einer Temperatur das Kryomedium zu sorbieren und dann bei einer anderen Temperatur es abzuscheiden. Die erste Wechselwirkung des Kryomediums mit dem Adsorber, die im folgenden Adsorbtion genannt worden ist, spielt sich bei einer niedrigeren Temperatur als die zweite Wechselwirkung, im folgenden Desorption genannt, ab. Die Umstellung des Behälters 2a (2b) mit dem Adsorber auf eine andere Betriebsweise (Adsorption - Desorption) vollzieht sich durch eine Temperaturänderung des darin verfügbaren Adsorbers. Dafür bedient man sich Erhitzer 9a (9b) und Kühler 10a (10b). Als Erhitzer 9a, 9b können elektrische Heizgeräte, Sonnenenergie, Wärmeenergie, Abwärme und die erforderliche Temperatur aufweisende Bauteile der Kältemaschine angewendet werden. Als Kühler 10a, 10b verwendet man Wasser, Luft, flüssige Kryomedien, den kälten Kosmos, die erforderliche Temperatur aufweisende Bauteile der Kältemaschine. Die Erhitzer 9a, 9b und die Kühler 10a, 10b weisen eine thermische Verbindung mit den Behältern 2a, 2b mit dem Adsorber auf. Diese Verbindung erreicht man mit Hilfe der Wärmebrücken oder ähnlicher Einrichtungen, die es erlauben, die Erhitzer 9a, 9b und die Kühler 10a, 10b abwechselnd an den Behälter 2a, 2b mit dem Adsorber anzuschließen und abzuschalten, um damit die Temperatur des letzteren verändern zu können.

Die Hoch- und Niederdruckleitungen 1a (1b) jedes Stranges a und b sind als eine einheitliche Rohrleitung ausgeführt, die die Funktionen sowohl der Hochdruckleitung, als auch der Niederdruckleitung abwechselnd erfüllt.

Die Wärmeaustausch-Einheit 3 dient für einen Wärmeaustausch zwischen den Kryomedium-Strömen in den Hochund Niederdruckleitungen sowie für einen Regenerativwärmeaustausch bei der Umsteuerung des Kryomediums-Stromes.

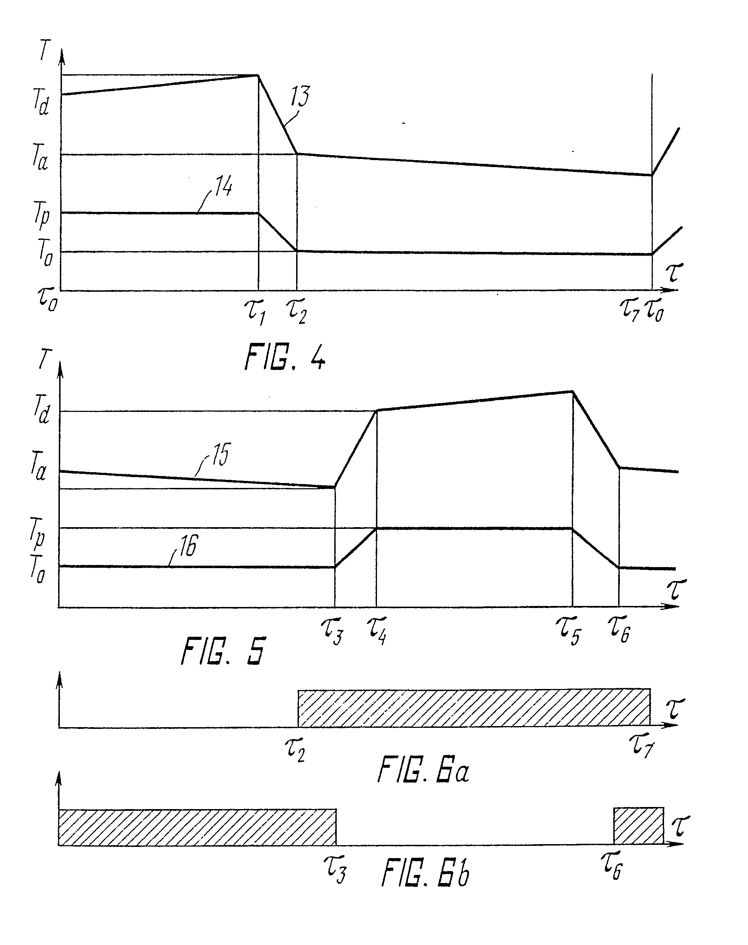

Eine Ausführungsform der Wärmeaustausch-Einheit 3 ist in Fig. 3 dargestellt bei welcher sich die Wärmeaustausch-Einheit 3 aus drei, hintereinander angeordneten Wärmeaustauschern 11 zusammensetzt. Als Wärmeaustauscher 11 eignen sich Wärmeaustauscher aus zusammengelöteten glatten Rohren, Wärmeaustauscher vom Typ "Rohr in Rohr", Platten- Rippenrohrwärmeaustauscher, Platten- Matrizenwärmeaustauscher und andere in der Kryotechnik anwendbare Wärmeaustauscher.

Bei der Auswahl des Typen des Wärmeaustauschers 11 muß berücksichtigt werden, daß neben einem wirksamen Wärmeaustausch zwischen den Strängen a und b der Kältemaschine der Wärmeaustauscher 11 auch die Eigenschaften einer Regenerators für einen Regenerativwärmeaustausch bei einer Richtungsänderung des Stromes des Kryomediums aufzuweisen hat.

Zur Intensivierung des Wärmeaustausches wird der erste Wärmeaustauscher 11 der Wärmeaustausch-Einheit 3 an die Kühler 10a, 10b (Fig. 1) angeschlossen. Sollte als Kryomedium Wasserstoff eingesetzt werden, umfaßt außerdem die Wärmeaustausch-Einheit 3 einen orthopara-Konverter und eine zusätzliche Kältemaschine (nicht gezeigt).

Die in Fig. 3 dargestellte Ausführungsform der Wärmeaustausch-Einheit 3 ist für eine Kältemaschine gedacht, die en Bord eines Weltraumschiffes benutzt wird und die weitere Kühlkörper 12 für die Wärmeemission in den kalten Kosmos sowie eine Vorkühlstufe 11', die an die Kühler 10a, 10b thermisch angeschlossen ist (Fig. 1), aufweist.

In Fig. 4 zeigt die Kurve 13 die Temperaturänderung T des Adsorbers innerhalb des Behälters 2a und die Kurve 14 die Temperaturänderung T des Wärmeübertragungsbehälters 4a innerhalb nur eines Kreisprozesses der Kältemaschine.

In Fig. 5 zeigt die Kurve 15 die Temperaturänderung T des Adsorbers im Behälter 2b und die Kurve 16 die Temperaturänderung des Wärmeübertragungsbehälters 4b innerhalb desselben Kreisprozesses der Kältemaschine.

Aus Fig. 6a ist ein Zyklogramm für die Arbeit der Wärmebrücke 5a erkennbar.

In Fig. 6b ist ein Zyklogramm für die Arbseit der Wärmebrücke 5b gezeigt.

Die gestrichelten Bereiche der Zyklogramme verweisen auf den eingeschalteten Zustand und die nicht gestrichelten auf den abgeschalteten Zustand der Wärmebrücken 5a, 5b.

Das Verfahren zur Kühlung eines Objektes mit Hilfe der kryogenen Adsorptionskältemaschine wird besser aus der Beschreibung der Wirkungsweise der in Fig. 1 dargestellten Vorrichtung verstanden.

An das Objekt 6, z.B., eine supraleitende Vorrichtung wird mindestens ein Wärmeübertragungsbehälter - im vorliegenden Fall der Wärmeübertragungsbehälter 4b - mit Hilfe der Wärmebrücke 5b angeschlossen, in welchem ein kryomedium bei der Temperatur und dem Druck der Kryostatierung enthalten ist, das durch des Verdichten des Kryomediums in der Hochdruckleitung 1a dank der Desorption des Kryomediums aus dem Behälter 2a mit dem Adsorber bei der Erhitzung des letzteren auf die Temperatur der Desorption, durch die Kühlung des komprimierten Kryomediums innerhalb der Wärmeaustausch-Einheit 3, durch des nachfolgende Einspritzen des komprimierten abgekühlten Kryomediums durch die Joule-Thompson-Drossel 8 unmittelbar vor der Zuführung zum ans Objekt 6 angeschlossenen Wärmeübertragungsbehälter 4b, durch des Evakuieren des Kryomediums aus dem Behälter 4b über die Niederdruckleitung 1b unter Erwärmung in der Wärmeaustausch-Einheit 3 und dessen Transport zum Behälter 2b mit dem Adsorber bei Kühlung des Adsorbers auf die Temperatur der Adsorption gewonnen wird. Verdichtet wird des Kryomedium in der Hochdruckleitung 1a bis an die Beendigung der Desorption, wonach der Behälter 2a mit dem Adsorber auf die Kühlung umgestellt, das Kryomedium in der Hochdruckleitung 1a zur Sicherung dessen isentroper Expansion und dessen Kühlung evakuiert und nach Erreichen der Temperatur und des Druckes der Kryostatierung durch das Kryomedium im Behälter 4a dieser zusätzlich mit dem zu kühlenden Objekt 6 thermisch gekoppelt wird. Nach restloser Adsorption der gesamten Menge des Kryomediums aus dem Wärmeübertragungsbehälter 4b in die Niederdruckleitungen 1b wird der Behälter 2 von der Kühlung auf die Erhitzung umgestellt, wonach der beschriebene Kreisprozeß wiederholt wird, mit nur dem Unterschied, daß die Leitung 1b die Funktion einer Hochdruckleitung und die Leitung 1a die Funktion einer Niederdruckleitung erfüllt.

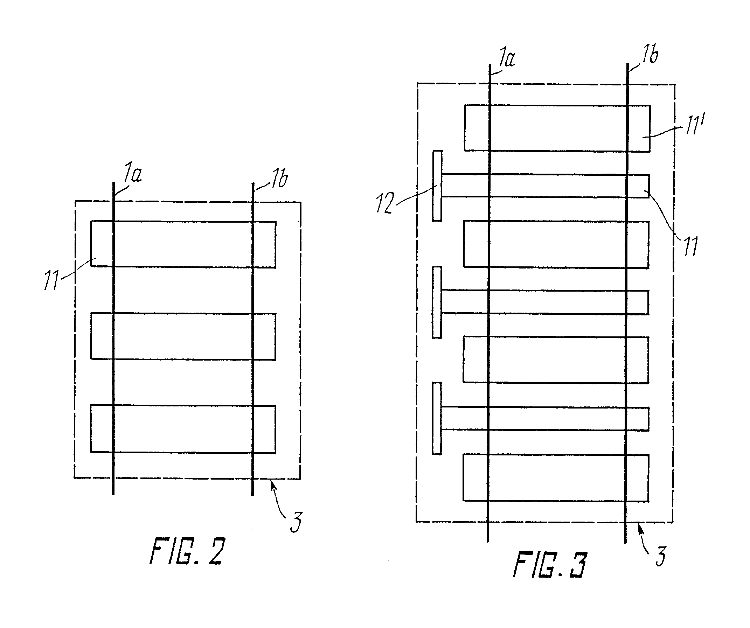

Der Funkt $\tau_0$ (Fign. 4,5) des Kreisprozesses entspricht dem Zustand der Kältemaschine, bei welchem der Behälter 2a mit dem Absorber auf eine Temperatur Td der Desorption aufgeheizt und der Behälter 2b mit dem Adsorber auf die Temperatur $T_a$ der Adsorption abgekühlt ist. Hierbei wird das Kryomedium aus dem Behälter 2a mit dem Adsorber desorbiert, in der Hochdruckleitung 1a auf einen, für das Einspritzen des Kryomediums durch die Joule-Thompson-Drossel erforderlichen Wert komprimiert, danach gelangt es in die Wärmeaustausch-Einheit 3, wo das Kryomedium zuvor auf eine der Temperatur des Kühlers 10a nahe Temperatur (die thermische Verbindung der Kühler 10a, 10b mit der Wärmeaustausch-Einheit 3 ist bedingt mit gestrichelter Linie gezeigt) und anschließend in den Wärmeaustauschern 11 (Fig. 2) auf eine Temperatur $T_p$ (Fig. 4) abgekühlt wird, die für das Einspritzen durch den Wärmeaustausch mit dem Strom des Kryomediums in der Niederdruckleitung 1b (des Stranges b) des Regenerativwärmeaustausches mit den vorgekühlten Bauteilen der Wärmeaustausch-Einheit 3 und mit dem Wärmeübertragungsbehälter 4a notwendig ist, deren Kühlvorgang aus der nachstehend angeführten Beschreibung besser verstanden wird. Die Temperatur des Wärmeübertragungsbehälters 4a, der mit dem vorgekühlten Hochdruck-Kryomedium gefüllt ist, ist gleich der Temperatur $T_p$, die über der Temperatur $T_o$ der Kryostatierung liegt, so daß die Wärmebrücke 5a in diesem Augenblick abgeschaltet bleibt. Das Kryomedium wird in den Wärmeübertragungsbehälter 4b über die Drossel 8 in der Niederdruckleitung (des Stranges b) eingespritzt. Entsprechend dem Joule-Thompson-Effekt fällt die Temperatur des Behälters 4b auf die Temperatur $T_o$ der Kryostatierung ab. Die Wärmebrücke 5b ist in diesem Augenblick mit dem Objekt 6 thermisch verbunden, und das letztere kühlt sich ab. Fernerhin wird das Kryomedium aus dem Wärmeübertragungsbehälter 4b über die Niederdruckleitung 1b durch die Wärmeaustausch-Einheit 3 hindurch evakuiert, wo es durch den Strom des Kryomediums in der Hochdruckleitung 1a erhitzt und nachher durch den Adsorber im Behälter 2b sorbiert wird, der auf die Temperatur $T_a$ der Adsorption abgekühlt ist. Der Prozeß wird durch eine Temperaturänderung des Adsorbers in den Behältern 2a, 2b geregelt und läuft bis auf die restlose Desorption des Kryomediums aus dem Behälter 2a mit dem Adsorber ab, was dem Punkt $\tau_1$ (Fig.4) entspricht. Im Anschluß daran wird der Adsorber im Behälter 2a (Fig. 1) auf die Temperatur $T_a$ der Adsorption abgekühlt, wobei die Kühlung innerhalb einer Zeitspanne stattfindet, die beachtlich kürzer ist als die Zeitspanne, die für das Einspritzen des Kryomediums aus dem Strang a in den Strang b erforderlich ist.

Im Ergebnis davon geschieht ein Evakuieren des Kryomediums und dessen Transport in den Behälter 2a mit dem Adsorber aus der Leitung 1a, in welcher der Druck auf den Druck der Kryostatierung absinkt. Hierbei vollzieht sich die isentrope Expansion des Kryomediums im Strang a der Kältemaschine, bei welcher sich das Kryomedium abkühlt und sich die Bauteile der Wärmeaustausch-Einheit 3 und den Wärmeübertragungsbehälter 4a abkühlen läßt. Nachdem die Temperatur des Wärmeübertragungsbehälters 4a auf die Temperatur $T_o$ der Kryostatierung abgefallen ist, wird die Wärmebrücke 5a eingeschaltet, wodurch die thermische Verbindung des Behälters 4a mit dem Objekt 6 neben der Verbindung mit dem Wärmeübertragungsbehälter 4b bewerkstelligt wird. Nach der Ausnutzung des Kühleffektes (der Punkt $\tau_3$ Fig. 5) des Kryomediums infolge der isentropen Expansion wird die Wärmebrücke 5b (der Punkt $\tau_3$, Fig. 6b) abgestellt, wonach der Behälter 2b mit dem Absorber auf die Temperatur $T_d$ der Desorption erwärmt wird, was dem Punkt $\tau_4$ in Fig. 5 entspricht.

Danach läuft der Teilkreisprozeß $\tau_4$ - $\tau_5$ - $\tau_6$ --$\tau_1$ - $\tau_0$ symmetrisch zu dem Teilkreisprozeß $\tau_0$ --$\tau_1$ - $\tau_2$ - $\tau_3$ - $\tau_4$ ab und endet im Punkt $\tau_0$, wonach sich der Kreisprozeß erneut wiederholt.

Die kryogene Adsorptionskältemaschine vermag sowohl im Verdampfer- als auch dem Verflüssigerbetrieb (Speicherbetrieb) zu arbeiten. Der erstere Betrieb ist für den Einsatz der Kältemaschine unter den Bedingungen der Schwerelosigkeit zu bevorzugen. Das komprimierte und vorgekühlte Kryomedium wird über die Expansionsdrossel 8 (z.B.) eine poröse Scheidewand) in den Niederdruckbereich in Form eines Dampf-Flüssigkeits-Gemisches eingespritzt, das im Wärmeübertragungsbehälter erhitzt und daraus über die Niederdruckleitung abgepumpt wird. Diese Betriebsweise setzt keine komplizierten verfahrenstechnischen Arbeitsgänge für die Trennung des Kryomediums in flüssige und geförmige Phasen und für das Flüssigkeitshalten unter der Schwerelosigkeit voraus. Daneben werden Spritzgeräusche vermieden, weil sich dabei keine Flüssigkeitstropfen bilden, die einen Mikrofoneffekt im zu kühlenden Objekt 6 bewirken.

Im Verflüssigerbetrieb wird zunächst das Kryomedium unter Verwendung des Joule-Thompson-Effektes oder durch die isentrope Expansion bei einem optimalen Druck in der Niederdruckleitung verflüssigt, wonach der Druck soweit ermäßigt wird, bis die Temperatur der Kryostatierung auftritt.

Die Kühlung des Kryomediums unter Verwendung des Effektes der isentropen Expansion ermöglichte es, einerseits den Wirkungsgrad der Kältemaschine zu steigern und zum anderen die Kryostatierung des Objektes kontinuierlich dadurch durchzuführen, daß an das Objekt gleichzeitig zwei Wärmeübertragungsbehälter im Zeitraum zwischen den Punkte $\tau_2$ und $\tau_3$ sowie $\tau_6$ und $\tau_7$ (Fign. 6a und 6b) des Kreisprozesses angeschlossen werden.

Die Änderung der Stromrichtung des Kryodiums mittels der Joule-Thompson-Drossel 8 verhindert deren Ver stopfung mit Feststoffteilchen, wodurch sich die Betriebssicherheit der Kältemaschine verbessert.

Als konkrete Ausführungsbeispiele dieser Erfindung werden hier kryogene Adsorptionskältemaschinen behandelt, in denen Helium-3, Wasserstoff und Sauerstoff eingesetzt werden.

Beispiel 1

Die kryogene Adsorptionskältemaschine mit darin eingesetztem Helium-3 dient für die Kühlung von Objekten auf eine Temperatur von unter 1 K. Als Adsorber gelangt bei dieser Kältemaschine Aktivkohle zum Einsatz oder werden Zeolithe eingesetzt, die das Helium-3 bei der Temperatur des flüssigen Heliums (ca. 4,2 K) adsorbieren und bei höher liegenden Temperaturen 15 bis 20 K es desorbieren. Die Kältemaschine mit darin eingesetztem Helium-3, die nach dem obig beschriebenen kryogenen Kreisprozaß betrieben wird, kann die Wärme vom Objekt unter Herabsetzung der Temperatur auf 4,2 K abgehen lassen, wodurch sich die Möglichkeit für den Einsatz eines Kryostates mit flüssigem Helium-4 als Kühler 10a, 10b, das beim Atmosphärendruck siedet, oder einer Helium-Kältemaschine mit geschlossenem Kreisprozeß, die auf 4,2 K abkühlt, bietet. Die Kältemaschine stellt eine gasdichte Kapsel dar, die mit dem Helium-3 unter Hochdruck (von über 20 MPa bei der Raumtemperatur - 300 K) gefüllt ist. Die Leitungen 1a und 1b bestanden aus dünnwandigen Rohren aus rostfreiem Stahl. Als Kühler diente ein Kryostat mit flüssigem Helium-4. Die Temperatur des Kühlers war gleich 4,2 K, was dem Siedepunkt des flüssigen Heliums-4 beim Atmosphärendruck entsprach. In der Kältemaschine wurden elektrische Heizgeräte 9a und 9b verwendet. Die Wärmebrükken 5a, 5b stellten fluchtend angeordnet ein Kupferrohr und einen Stab dar, wobei der dazwischen vorhandene ringförmige Spalt mit Hilfe einer zusätzlichen kleinen Adsorptionspumpe unter Abschaltung der Wärmebrücke vakuumiert oder mit flüssigem Helium bei geschalteter Wärmebrücke durch Desorption gefüllt wurde. Der Durchmesser der Leitungen 1a und 1b und der Aufbau der Wärmeaustausch-Einheit 3 wurden davon ausgehend festgelegt, daß der Strömungswiderstand gering sein mußte. Die Wärmeaustausch-Einheit 3 war dreistufig und bestand aus Platten-Rippenrohrwärmetauschern. Der Durchmesser der Leitungen 1a und 1b nahm von 16 mm auf dem Abschnitt, welcher den Behälter 2a (2b) mit dem Adsorber mit der Wärmeaustausch-Einheit 3 verband, bis auf 3 mm auf dem Abschnitt, der die Wärmeaustausch-Einheit 3 mit dem Wärmeübertragungsbehälter 4a, 4b verband, ab. Der Wärmeübertragungsbehälter 4a, 4b hatte ein Fassungsvermögen von etwa 1 cm³ und war mit porigem Kupfer zur Sicherung eines besseren Wärmekontaktes mit dem Helium-3 gefüllt. Die Drossel 8 war als poriger Stopfen ausgebildet und beidseitig mit Vor- und Feinfiltern ausgestattet. Die Kältemaschine wurde von außen am Boden eines Behälters mit flüssigem Helium befestigt und mit einem Helium-Schirm abgedeckt.

Die Kältemaschine mit darin eingesetztem Helium-3 arbeitet wie folgt. Nach der Füllung des Kryostates mit dem Helium-4 wurden alle Bauteile der Kältemaschine auf die Temperatur 4,2 K abgekühlt. Zu diesem Zweck ließ man sich die Temperatur der Behälter 2a, 2b mit dem Adsorber auf die Temperatur der Desorption erhöhen. Das Helium-3 wurde in der ersten Stufe des Wärmetauschers 3, der einen Wärmekontakt mit dem Boden des Behälters (des Kühlers 10a, 10b) hatte, auf 4,2 K abgekühlt, und es kühlte durch den Diffusionswärmeaustausch alle Bauteile der Kältemaschine. Nachher veranlaßte man die adeabatische Expansion des Kryomediums in einem der Stränge, z.B., im Strang a. Das Helium-3 wurde teilweise im Wärmeübertragungsbehälter 4a kondensiert. Indem man in diesem Strang, den Druck auf 0,1 Pa abfallen ließt, erreichte man einen Siedepunkt des Heliums-3 zwischen 0,3 und 0,5 K. Nach der Kälteabfuhr an das zu kühlende Objekt über die Wärmebrücke 5a wurde der Druck im Strang b erhöht und begann man mit dem Einspritzen. Der optimale Druck für das Einspritzen des Heliums-3 betrug 0,4 MPa. Bei diesem Druck werden etwa 60% des Heliums-3 beim Einsatz der Kältemaschine im Verflüssigerbetrieb verflüssigt. Für den Verdampferbetrieb wurde die Drossel 8 mit einem solchen Durchlaßquerschnitt ausgewählt, daß die Kältemenge, die durch das Einspritzen bereitgestellt wird, für die Wärmeabfuhr von dem Objekt 6 ohne Sammlung der flüssigen Phase ausreicht. Nach restloser Desorption des Heliums-3 aus dem Behälter 2b des Stranges b ließ man sich das im Strang b komprimierte Helium-3 adiabetisch expandieren. Zu diesem Zweck schloß man an den Behälter 2b den Kühler 10b an und kühlte man den Adsorber auf die Temperatur 4,5 K. Die Temperatur des Kryomediums im Wärmeübertragungsbehälter 4b ging auf 0,3 K zurück und mit Hilfe der Wärmebrücke 5b wurde dieser Behälter an das zu kühlende Objekt 6 angeschlossen. Danach wurde die Wärmebrücke 5a abgeschaltet und der Druck im Strang a durch die Umschaltung des Behälters 2a mit dem Adsorber auf das Heizgerät 9a erhöht.

Die kryogene Adsorptionskältemaschine mit darin eingesetztem Helium-3 ermöglichte eine kontinuierliche Kryostatierung des Objektes auf einem Temperaturniveau von ca. 0,3 K unter Wärmeabfuhr mit einem Temperaturniveau von 4,2 K.

Beispiel 2

Als Kryomediums bediente man sich des Wasserstoffes; als Adsorber für die Adsorption und Desorption des Wasserstoffes wurden Metallhydride wie, z.B., LaHi5 benutzt. Die erste Reaktion, also die Desorption, verlief bei einer Temperatur von etwa 300 K, die zweite, d.h. die Desorption, bei einer Temperatur von etwa 400 K. Als Kühler für die Behälter 2a, 2b mit dem Adsorber bediente man sich der Luft bzw. des Wassers und als Erhitzer - eines elektrischen Heizgerätes, der Abwärme, z.B., eines Kernreaktors oder der Sonnenenergie. Die Inversionstemperatur des Joule-Thompson-Effektes betrug für den Wasserstoff ca. 200 K, d.h., sie lag beachtlich niedriger als die Temperatur des Kühlers. Daher machte es sich erforderlich, für die Verflüssigung des Wasserstoffes durch Einspritzen eine Vorkühlung auf Temperaturen von unter 120 K sicherzustellen. Nennenswert verringert oder gar ausgeschlossen werden kann die erforderliche Kälteleistung des zusätzlichen Kühlungssystems dank der Phase der adiabatischen Expansion des vorher komprimierten und gekühlten Wasserstoffes im vorgeschlagenen kryogenen Kreisprozeß. Sollte der anfängliche Druck ziemlich hoch (mehr als 6,0 MPa) und die anfängliche Temperatur hinreichend niedrig liegen, dann kann der Wasserstoff sich infolge der isentropen Expansion bis zur Verflüssigung abkühlen. Die isentrope Expansion des Wasserstoffes bewirkt eine Kühlung des Gases, selbst wenn dessen Temperatur 300 K beträgt. Dies kann in der Stufe der Einführung in den Verdampferbetrieb beim Start gleichzeitig mit der Wärmeabfuhr an die Kühlkörper benutzt werden.

Die kryogene Adsorptionskältemaschine mit darin eingesetztem Wasserstoff sichert die Kryostatierung eines Objektes auf einem Temperaturniveau von 20 K bis 30 K. Bei der Kryostatierung auf einem Temperaturniveau von unter 13,8 K geht der Wasserstoff in eine feste Phase über. Zur Sicherung einer ununterbrochenen Arbeitsweise bei einer Temperatur der Kryostatierung von 14 K ist ein Kältespeicher, der mit dem zu kühlenden Objekt gekoppelt ist, einzusetzen.

Beispiel 3

Als Kryomediums bediente man sich des Sauerstoffes, der eine reversible chemische Reaktion mit dem Adsorber wie, z.B., Silber oder einem anderen Stoff, der befähigt ist, den Sauerstoff bei dar Kühlung zu sorbieren und bei der Erwärmung wieder freizusetzen, bewirken kann. Die erste Reaktion, also die Adsorption unter Wechselwirkung des Silbers (Ag) mit dem Sauerstoff (O$_2$), verläuft bei einer Temperatur von ca. 270 K, dabei wird der Sauerstoff bei einem Druck von ca. 0,03 MPa, was einer O$_2$-Temperatur im Wärmeübertragungsbehälter von 80 K entspricht, oder bei einem Druck von 0,01 MPa, was einer Temperatur von 90 K entspricht, sorbiert. Die zweite Reaktion, d.h. die Desorption, verläuft bei einer Temperatur zwischen 400 und 800 K. Der Sauerstoff setzt sich aus dem Adsorber frei und kann hierbei auf einen Druck zwischen 1 und 10 MPa komprimiert werden.

Die Kältemaschine gestattet eine Wärmeabfuhr von dem zu kühlenden Objekt mit einem Temperaturniveau von 270 K.

Die in den Ausführungsbeispielen 1, 2 und 3 beschriebenen kryogenen Adsorptionskältemaschinen weisen einen theoretischen Wirkungsgrad auf, der um 10 bis 20 % höher liegt, als der Wirkungsgrad der ähnlichen Kältemaschinen mit bekanntem Schema und Kreisprozeß.

Gewerbliche Anwendbarkeit

Die kryogenen Adsorptionskältemaschinen eignen sich für die Kühlung von supraleitenden magnetischen, energetischen und Transportsystemen, Strahlungsempfängern, biologischen Objekten zur Gewinnung und Lagerung flüssiger Kryomedien, für die Kryotechnik, die Durchführung von Versuchen auf dem Gebiet der Physik der niedrigen Temperaturen.

**Ansprüche**

1. Kryogene Adsorptionskältemaschine, die eine Kapsel darstellt, die mit einem Kryomedium gefüllt und als mindestens zwei Parallelstränge (a,b) ausgeführt ist, welche miteinander durch eine Verbindungsleitung (7) verbunden sind und von denen jeder Strang, aufeinanderfolgend mittels Hoch- und Niederdruckleitungen (1a, 1b) untereinander verbunden, einen Behälter (2a, 2b) mit einem Adsorber, der mit einem Erhitzer (9a, 9b) und einem Kühler (10a, 10b) ausgestattet ist, eine Wärmeaustausch-Einheit (3), einen Wärmeübertragungsbehälter (4a, 4b) und eine Wärmebrücke (5a, 5b) für die Kontaktgabe mit der Oberfläche des zu kühlenden Objektes (6) aufweist, **dadurch gekennzeichnet,** daß die Verbindungsleitung (7) die Wärmeübertragungsbehälter (4a, 4b) miteinander unmittelbar verbindet und eine Joule-Thompson-Drossel trägt und daß die Hoch- und Niederdruckleitungen (1a, 1b) jedes Stranges (a, b) als eine einheitliche Rohrleitung ausgeführt sind, welche die Funktion der Hoch- und der Niederdruckleitung abwechselnd erfüllt.

2. Verfahren zur Kühlung eines Objektes mit Hilfe der kryogenen Adsorptionskältemaschine, das darin besteht, daß mit dem Objekt (6) mindestens ein Wärmeübertragungsbehälter (4a) thermisch gekoppelt wird, in welchem das Kryomedium bei der Temperatur und dem Druck der Kryostatierung enthalten ist, das durch das Verdichten des Kryomediums in der Hochdruckleitung (1b) der kryogenen Kältemaschine dank der Desorption des Kryomediums aus dem Behälter (2b) mit dem Adsorber während der Erhitzung des letzteren auf die Temperatur der Desorption, durch die Kühlung des verdichteten Kryomediums in der Wärmeaustausch-Einheit (3), durch die nachfolgende Einspritzung des verdichteten und abgekühlten Kryomediums über die Joule-Thompson-Drossel (8) unmittelbar vor der Zuführung zu dem an das Objekt (6) angeschlossenen Wär meübertragungsbehälter (4a), durch das Evakuieren des Kryomediums aus dem Wärmeübertragungsbehälter (4a) über die Niederdruckleitung (1a) unter Erwärmung in der Wärmeaustausch-Einheit (3) in den Behälter (2a) mit dem Adsorber in der Niederdruckleitung (1a) bei Kühlung des Kryomediums auf die Temperatur der Adsorption gewonnen wird und daß nach restloser Adsorption des gesamten Kryomediums aus dem Wärmeübertragungsbehälter (2a) in der Niederdruckleitung (1a) der Behälter (2a) mit dem Adsorber in dieser Leitung von der Kühlung auf die Erhitzung umgestellt wird, **dadurch gekennzeichnet,** daß das Kryomedium in der Hochdruckleitung (2b) so lange verdichtet wird, bis die Desorption beendet worden ist, wonach erst der Behälter (2b) mit dem Adsorber auf die Kühlung umgestellt und das Kryomedium in der Hochdruckleitung (1b) zur Sicherung dessen isentroper Expansion und dessen Kühlung evakuiert wird und daß nach Erreichen der Temperatur und des Druckes der Kryostatierung von dem Kryomedium im Wärmeübertragungsbehälter (4b) in der Hochdruckleitung (1b) dieser Behälter (4b) zusätzlich an das zu kühlende Objekt (6) thermisch angeschlossen wird.

FIG. 1

FIG. 2

FIG. 3

FIG. 4

FIG. 5

FIG. 6a

FIG. 6b

**I. CLASSIFICATION OF SUBJECT MATTER** (if several classification symbols apply, indicate all) [6]

According to International Patent Classification (IPC) or to both National Classification and IPC

Int. Cl.[5]    F 25 B 17/08

**II. FIELDS SEARCHED**

| Minimum Documentation Searched [7] | |
|---|---|
| Classification System | Classification Symbols |
| Int. Cl.[4] | F 25 B 17/00, 17/08, 19/00, F 17C3/08, 11/00 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | SU, A1, 1096443 (Fizichesky institut im. P.N. Lebedeva) 7 June 1984 (07.06.84) (cited in the description) | 1-2 |
| A | US, A, 4300360 (Gerald Chanin et al.) 17 November 1981 (17.11.81), the abstract (cited in the description) | 1-2 |
| A | US, A, 4611499 (Jack A. Jones) 10 February 1987 (10.02.87), the claims (cited in the description) | 1-2 |
| A | SU, A1, 1134862 (Odessky tekhnologichesky institut kholodilnaipromyshlennosty ), 15 January 1985 (15.01.85), the claims | 1-2 |
| A | SU, A1, 840620 (A.B.Kazankov et al), 23 June 1981 (23.06.81) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 7 September 1989 (07.09.89) | 2 October 1989 (02.10.89) |
| International Searching Authority | Signature of Authorized Officer |
| ISA/SU | |